# FASCICULE DE BREVET EUROPEEN

(11) **EP 3 468 032 B1**
(45) Date de publication et mention de la délivrance du brevet: **22.12.2021**
(21) Numéro de dépôt: 18198962.5
(22) Date de dépôt: 05.10.2018
(51) Int. Cl.: H02S 20/24

(54) **DISPOSITIF DE FIXATION AMELIORE D'UN PANNEAU SOLAIRE A UN BATI**
VERBESSERTE BEFESTIGUNGSVORRICHTUNG EINES SOLARPANEELS AN EINER HALTERUNG
IMPROVED DEVICE FOR ATTACHING A SOLAR PANEL TO A FRAME

(30) Priorité: 06.10.2017 FR 1759404
(43) Date de publication de la demande: 10.04.2019
(73) Titulaire: EPC Solaire, 69290 Saint-Genis-les-Ollieres (FR)
(72) Inventeur: BOUSQUET, Jean-Paul, 69210 SAINT PIERRE LA PALUD (FR); CHALEYSSIN, Gérard, Guy, 69290 SAINT-GENIS-LES-OLLIERES (FR)
(74) Mandataire: Weber, Jean-François

(56) Documents cités:
- US-A1- 2016 111 996

## Description

La présente invention concerne le domaine général des panneaux solaires utilisés pour convertir le rayonnement solaire en énergie thermique ou électrique, et plus précisément le problème particulier de la fixation de ces panneaux solaires sur une surface d'accueil, par exemple une toiture.

La présente invention se rapporte plus particulièrement à un dispositif de fixation d'un panneau solaire à un bâti, ledit panneau solaire comprenant au moins une plaque formant capteur solaire et un support pour ladite plaque attaché à cette dernière, ledit support comportant lui-même au moins un premier longeron, ledit premier longeron comprenant une aile s'étendant en direction de l'intérieur du panneau, ledit dispositif de fixation comprenant au moins :
- une surface d'appui contre laquelle ledit premier longeron est destiné à venir reposer sous l'effet du poids du panneau solaire,
- une première butée de blocage pour ledit premier longeron, disposée en regard de la surface d'appui pour que ledit premier longeron puisse être interposé entre ladite surface d'appui et ladite première butée de blocage afin de limiter ou interdire le déplacement dudit premier longeron selon une première direction,
- une deuxième butée de blocage pour ledit premier longeron.

La présente invention concerne également un système de fixation d'une plaque formant capteur solaire à un bâti, comprenant au moins :
- un support pour ladite plaque destiné à être attaché à cette dernière, ledit support comportant lui-même au moins un premier longeron, ledit premier longeron comprenant une aile s'étendant en direction de l'intérieur du panneau, et
- un dispositif de fixation dudit support à un bâti, comprenant lui-même au moins :
   ▪ une surface d'appui contre laquelle ledit premier longeron est destiné à venir reposer sous l'effet du poids du panneau solaire,
   ▪ une première butée de blocage pour ledit premier longeron, disposée en regard de la surface d'appui pour que ledit premier longeron puisse être interposé entre ladite surface d'appui et ladite première butée de blocage afin de limiter ou interdire le déplacement dudit premier longeron selon une première direction,
   ▪ une deuxième butée de blocage pour ledit premier longeron.

La présente invention concerne en outre un ensemble de conversion du rayonnement solaire en énergie électrique ou thermique, comprenant au moins :
- un panneau solaire, comprenant lui-même au moins une plaque formant capteur solaire et un support pour ladite plaque attaché à cette dernière, ledit support comportant lui-même au moins un premier longeron, ledit premier longeron comprenant une aile s'étendant en direction de l'intérieur du panneau, et
- un dispositif de fixation dudit panneau solaire à un bâti, ledit dispositif de fixation comprenant au moins :
   ▪ une surface d'appui contre laquelle ledit premier longeron est destiné à venir reposer sous l'effet du poids du panneau solaire,
   ▪ une première butée de blocage pour ledit premier longeron, disposée en regard de la surface d'appui pour que ledit premier longeron puisse être interposé entre ladite surface d'appui et ladite première butée de blocage afin de limiter ou interdire le déplacement dudit premier longeron selon une première direction,
   ▪ une deuxième butée de blocage pour ledit premier longeron.

Il est connu de positionner des panneaux solaires sur des toitures, au sol, sur des murs ou même sur des véhicules, afin que ces panneaux captent les rayons du soleil et les transforment, grâce au(x) capteur(s) solaire(s) qui équipent les panneaux, en énergie thermique et/ou électrique.

Ces panneaux solaires connus comprennent une plaque formant capteur solaire et un cadre qui entoure la plaque.

Afin d'assurer la fixation du panneau sur un bâti considéré (toiture, sol, mur, etc.), il est connu de mettre en oeuvre des systèmes d'accroché comprenant une bride destinée à être reliée au bâti et venir pincer le cadre pour maintenir ce dernier sur le bâti. Une telle configuration permet de maintenir le panneau dans une position fixe présentant une exposition optimale aux rayons du soleil.

Il est également connu du document US-2016/0111996 de mettre en oeuvre des ensembles de serrage pour des panneaux solaires, les ensembles présentant des caractéristiques géométriques, des ouvertures et des saillies permettant de faciliter l'installation des panneaux solaires.

Ces systèmes d'accroche connus, s'ils donnent globalement satisfaction, n'en présentent pas moins un certain nombre d'inconvénients.

En effet, lorsque le panneau est soumis à des sollicitations mécaniques intenses, par exemple lorsqu'il est soumis à un vent violent, on constate qu'il a tendance à se déformer et ainsi à se décrocher de la bride. Ce décrochage peut entraîner plusieurs inconvénients majeurs, dont l'arrêt de la production d'électricité du panneau (ce dernier n'étant par exemple plus relié au réseau électrique), l'endommagement de ce dernier (par exemple si le panneau déformé l'est de manière irréversible ou s'il cogne contre un autre objet, tel que le support ou un autre panneau), et/ou l'envol du panneau avec le risque d'accident corporel qui en découle. En d'autres termes, ces systèmes d'accroché ne sont pas suffisants pour garantir le maintien du panneau solaire en place quelles que soient les conditions météorologiques. Il existe ainsi un risque de voir le panneau solaire échapper à l'emprise de la bride en cas de conditions météorologiques particulières (par exemple des vents violents).

En définitive, les systèmes d'accroche connus s'avèrent être d'une conception non optimale, notamment en regard de conditions d'utilisation sévères.

Les objets assignés à l'invention visent par conséquent à remédier aux différents inconvénients susmentionnés et à proposer un nouveau dispositif de fixation d'un panneau solaire à un bâti qui soit robuste, peu encombrant, fiable et dont la fabrication est facile à mettre en oeuvre et peu coûteuse.

Un autre objet assigné à l'invention vise à proposer un nouveau dispositif de fixation de structure simple.

Un autre objet assigné à l'invention vise à proposer un nouveau dispositif de fixation permettant la fixation d'un panneau à un bâti de manière facile, rapide et durable.

Un autre objet assigné à l'invention vise à proposer un nouveau dispositif de fixation permettant la fixation d'un panneau à un bâti de manière à la fois résistante et réversible.

Un autre objet assigné à l'invention vise à proposer un nouveau dispositif de fixation permettant à la fois une fixation particulièrement aisée et rapide d'un panneau solaire sur un bâti, et l'enlèvement facile du panneau lorsque l'utilisateur le souhaite.

Un autre objet assigné à l'invention vise à proposer un nouveau dispositif de fixation capable de garder un panneau solaire en place sur un bâti même en cas de conditions extérieures défavorables, comme par exemple un vent très violent.

Par ailleurs, un autre objet assigné à l'invention vise à proposer un nouveau système de fixation qui est robuste et facile et rapide à monter ou à démonter, tout en permettant d'obtenir le maintien sur un bâti d'une plaque formant capteur solaire de manière particulièrement fiable.

Par ailleurs, un autre objet assigné à l'invention vise à proposer un nouvel ensemble de conversion du rayonnement solaire en énergie électrique ou thermique qui est robuste et facile et rapide à monter ou à démonter sur un bâti.

Les objets assignés à l'invention sont atteints à l'aide d'un dispositif de fixation d'un panneau solaire à un bâti, ledit panneau solaire comprenant une plaque formant capteur solaire et un support pour ladite plaque attaché à cette dernière, ledit support comportant lui-même au moins un premier longeron, ledit premier longeron comprenant une aile s'étendant en direction de l'intérieur du panneau, ledit dispositif de fixation, selon la revendication 1, comprenant au moins :
- une surface d'appui contre laquelle ledit premier longeron est destiné à venir reposer sous l'effet du poids du panneau solaire,
- une première butée de blocage pour ledit premier longeron, disposée en regard de la surface d'appui pour que ledit premier longeron puisse être interposé entre ladite surface d'appui et ladite première butée de blocage afin de limiter ou interdire le déplacement dudit premier longeron selon une première direction,
- une deuxième butée de blocage pour ledit premier longeron,
le dispositif de fixation comprenant également au moins une troisième butée de blocage pour ledit premier longeron, disposée en regard de la deuxième butée de blocage pour que ledit premier longeron puisse être interposé entre lesdites deuxième et troisième butées de blocage afin de limiter ou interdire le déplacement dudit premier longeron selon une seconde direction sensiblement perpendiculaire à ladite première direction, caractérisé en ce que le dispositif de fixation comprend en outre au moins une pièce formant un coude, ladite pièce comportant elle-même au moins une première portion d'un côté du coude, et une seconde portion de l'autre côté du coude, ladite pièce formant un logement délimité par ledit coude et lesdites première et seconde portions, ledit logement étant destiné à accueillir au moins en partie, voire en totalité, ladite aile.

Les objets assignés à l'invention sont également atteints à l'aide d'un système de fixation d'une plaque formant capteur solaire à un bâti, selon la revendication 14, comprenant :
- un support pour ladite plaque destiné à être attaché à cette dernière, ledit support comportant lui-même au moins un premier longeron, ledit premier longeron comprenant une aile s'étendant en direction de l'intérieur du panneau, et
- un dispositif de fixation dudit support à un bâti, comprenant lui-même au moins :
   ▪ une surface d'appui contre laquelle ledit premier longeron est destiné à venir reposer sous l'effet du poids du panneau solaire,
   ▪ une première butée de blocage pour ledit premier longeron, disposée en regard de la surface d'appui pour que ledit premier longeron puisse être interposé entre ladite surface d'appui et ladite première butée de blocage afin de limiter ou interdire le déplacement dudit premier longeron selon une première direction,
   ▪ une deuxième butée de blocage pour ledit premier longeron,
le dispositif de fixation comprenant également au moins une troisième butée de blocage pour ledit premier longeron, disposée en regard de la deuxième butée de blocage pour que ledit premier longeron puisse être interposé entre lesdites deuxième et troisième butées de blocage afin de limiter ou interdire le déplacement dudit premier longeron selon une seconde direction sensiblement perpendiculaire à ladite première direction, caractérisé en ce que le dispositif de fixation comprend en outre au moins une pièce formant un coude, ladite pièce comportant elle-même au moins une première portion d'un côté du coude, et une seconde portion de l'autre côté du coude, ladite pièce formant un logement délimité par ledit coude et lesdites première et seconde portions, ledit logement étant destiné à accueillir au moins en partie, voire en totalité, ladite aile.

Les objets assignés à l'invention sont également atteints à l'aide d'un ensemble de conversion du rayonnement solaire en énergie électrique ou thermique, selon la revendication 15, comprenant :
- un panneau solaire, comprenant lui-même une plaque formant capteur solaire et un support pour ladite plaque attaché à cette dernière, ledit support comportant lui-même au moins un premier longeron, ledit premier longeron comprenant une aile s'étendant en direction de l'intérieur du panneau, et
- un dispositif de fixation dudit panneau solaire à un bâti, ledit dispositif de fixation comprenant au moins :
   ▪ une surface d'appui contre laquelle ledit premier longeron est destiné à venir reposer sous l'effet du poids du panneau solaire,
   ▪ une première butée de blocage pour ledit premier longeron, disposée en regard de la surface d'appui pour que ledit premier longeron puisse être interposé entre ladite surface d'appui et ladite première butée de blocage afin de limiter ou interdire le déplacement dudit premier longeron selon une première direction,
   ▪ une deuxième butée de blocage pour ledit premier longeron,
le dispositif de fixation comprenant également au moins une troisième butée de blocage pour ledit premier longeron, disposée en regard de la deuxième butée de blocage pour que ledit premier longeron puisse être interposé entre lesdites deuxième et troisième butées de blocage afin de limiter ou interdire le déplacement dudit premier longeron selon une seconde direction sensiblement perpendiculaire à ladite première direction, caractérisé en ce que le dispositif de fixation comprend en outre au moins une pièce formant un coude, ladite pièce comportant elle-même au moins une première portion d'un côté du coude, et une seconde portion de l'autre côté du coude, ladite pièce formant un logement délimité par ledit coude et lesdites première et seconde portions, ledit logement étant destiné à accueillir au moins en partie, voire en totalité, ladite aile.

D'autres particularités et avantages de l'invention apparaîtront et ressortiront plus en détail à la lecture de la description faite ci-après, en référence aux dessins annexés, donnés uniquement à titre d'exemples illustratifs et non limitatifs, dans lesquels :
- La figure 1 illustre, selon une vue en perspective, une partie supérieure d'un dispositif de fixation selon un premier mode de réalisation de l'invention, en interaction avec un panneau solaire partiellement représenté.
- La figure 2 illustre, selon une vue en perspective, un dispositif de fixation selon un second mode de réalisation de l'invention, en interaction avec un panneau solaire partiellement représenté.
- La figure 3 illustre, selon une vue de côté, une coupe d'un dispositif de fixation selon un troisième mode de réalisation de l'invention, en interaction avec un panneau solaire et un bâti partiellement représentés.
- La figure 4 illustre, selon une vue de côté, une coupe d'un dispositif de fixation selon un quatrième mode de réalisation de l'invention, en interaction avec un premier longeron.
- La figure 5 illustre, selon une vue en perspective, une partie supérieure d'un dispositif de fixation selon un cinquième mode de réalisation de l'invention, en interaction avec un panneau solaire partiellement représenté.
- La figure 6 illustre, selon une vue en perspective, du dispositif de fixation de la figure 5, sans le panneau solaire.
- La figure 7 illustre, selon une vue en perspective, des première et troisième pièces du dispositif de fixation de la figure 6.
- La figure 8 illustre, selon une vue en perspective, une deuxième pièce du dispositif de fixation de la figure 6.
- La figure 9 illustre, selon une vue de côté, une coupe d'une partie supérieure d'un dispositif de fixation selon un sixième mode de réalisation de l'invention, en interaction avec un premier longeron.

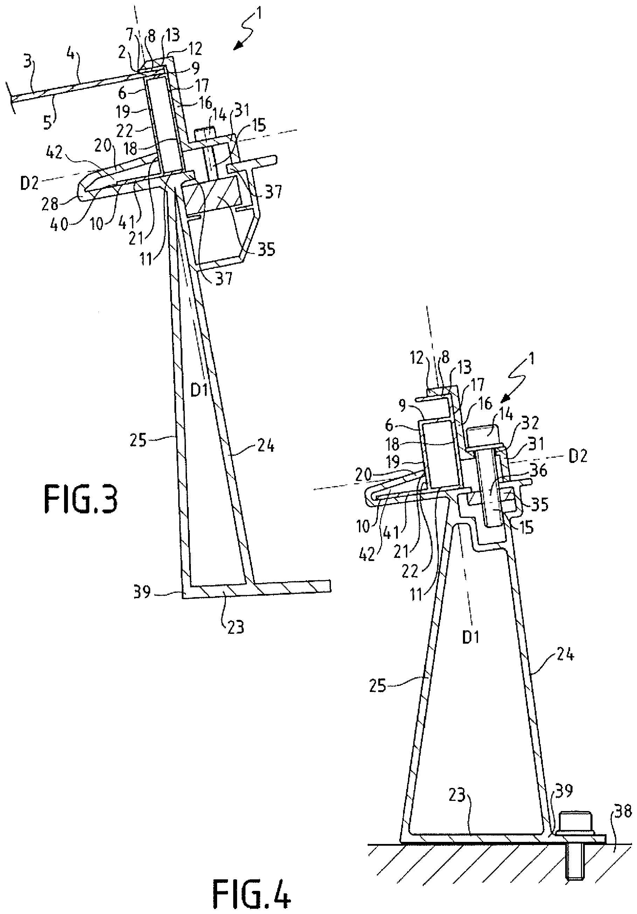

L'invention concerne, selon un premier aspect, illustré aux figures, un dispositif de fixation 1 d'un panneau solaire 2 à un bâti 38. En d'autres termes, le dispositif de fixation 1 est avantageusement destiné à attacher, c'est-à-dire à solidariser, de préférence de manière réversible, le panneau solaire 2 audit bâti 38, comme illustré à la figure 4. Ledit bâti 38 est de façon préférentielle formé par un toit ou un mur (par exemple d'une habitation, d'un local commercial ou industriel ou même d'un parking), ou bien encore par un véhicule, un poteau, une borne (par exemple une borne téléphonique sur une autoroute), ou encore une surface au sol ou toute autre structure capable de supporter le panneau solaire 2.

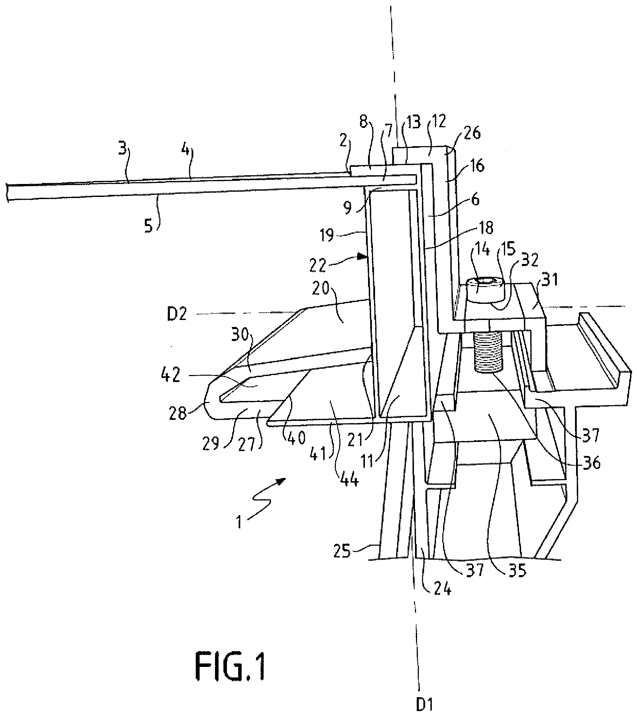

Selon l'invention, comme illustré aux figures 1, 2, 3, 5 et 9, ledit panneau solaire 2 comprend au moins une plaque 3 formant capteur solaire, ledit capteur solaire captant avantageusement les rayons du soleil pour fournir de l'électricité ou de la chaleur. Par exemple, la plaque 3 forme un capteur solaire thermique conçu pour capter la chaleur du rayonnement solaire et la transférer à un fluide caloporteur de préférence destiné à chauffer un bâtiment et/ou à produire de l'eau chaude, ou bien encore la plaque 3 forme un capteur solaire photovoltaïque (ou module photovoltaïque) conçu pour convertir le rayonnement solaire en électricité. Alternativement, la plaque 3 forme un capteur solaire hybride à la fois photovoltaïque et thermique.

De préférence, ladite plaque 3 est sensiblement plane et s'étend sensiblement selon un plan moyen d'extension. Ladite plaque 3 présente avantageusement une surface extérieure 4 destinée à être tournée vers l'extérieur, c'est-à-dire vers le soleil ou à recevoir les rayons du soleil, et une surface intérieure 5 opposée et parallèle à ladite surface extérieure 4. Ladite surface intérieure 5 est de préférence tournée vers le bâti 38, et séparée de ladite surface extérieure 4 par l'épaisseur de ladite plaque 3.

De manière préférentielle, ladite plaque 3 comprend plusieurs bords qui la délimitent, par exemple elle comprend quatre bords, et est de forme générale rectangulaire ou carrée.

Toujours selon l'invention, ledit panneau solaire 2 comprend également un support pour ladite plaque 3 attaché à cette dernière. De préférence, ledit support est sensiblement rigide et est par exemple formé par un cadre entourant en totalité ou en partie ladite plaque 3. Ainsi, ledit support assure de manière avantageuse la tenue mécanique de ladite plaque 3, empêchant en particulier à cette dernière de se déformer, par exemple se plier à cause du vent ou de la manipulation du panneau solaire 2 lors de son installation sur le bâti 38.

Selon l'invention, comme illustré aux figures aux figures 1 à 5 et 9 ledit support comporte lui-même au moins un premier longeron 6, ce dernier étant avantageusement relié à un premier bord 7 (parmi lesdits bords) de ladite plaque 3 par exemple par collage, par glissement et/ou par pression. Par exemple, ledit premier longeron 6 comprend une paroi supérieure 8 et une première paroi inférieure 9 entre lesquelles ledit premier bord 7 est inséré, coincé, et/ou collé, ladite paroi supérieure 8 et/ou ladite première paroi inférieure 9 étant de préférence destinée(s) à être positionnée(s) sensiblement parallèlement à ladite plaque 3. Ladite paroi supérieure 8 forme avantageusement un bord emprisonnant le premier bord 7 de la plaque 3. Ainsi, ladite paroi supérieure 8 et ladite première paroi inférieure 9 sont de préférence parallèles.

De façon avantageuse, ledit support comprend plusieurs longerons sensiblement équivalents, par exemple quatre longerons, dont au moins un second longeron (non représenté) associé à un second bord (parmi lesdits bords) de la plaque 3, ledit second bord étant situé à l'opposé dudit premier bord 7, ledit second longeron étant sensiblement situé à l'opposé et en regard dudit premier longeron 6 par rapport à ladite plaque 3. Par exemple, ledit support est formé par un cadre et présente une forme générale sensiblement rectangulaire ou carrée.

Selon l'invention, comme illustré et visible aux figures 3, 4 et 9, ledit dispositif de fixation 1 comprend également au moins une surface d'appui 10 contre laquelle ledit premier longeron 6 est destiné à venir reposer sous l'effet du poids du panneau solaire 2.

De manière avantageuse, ledit premier longeron 6 comprend une seconde paroi inférieure 11 qui est de préférence sensiblement parallèle à et à distance de ladite paroi supérieur 8 et/ou ladite première paroi inférieure 9 et/ou ladite plaque 3, ladite surface d'appui 10 étant destinée à être positionnée contre ladite seconde paroi inférieure 11. En d'autres termes, ladite surface d'appui 10 est avantageusement destinée à recevoir ladite seconde paroi inférieure 11. Préférentiellement, ladite première paroi inférieure 9 est positionnée entre ladite paroi supérieure 8 et ladite seconde paroi inférieure 11.

De façon préférentielle, ladite surface d'appui 10 est destinée à être positionnée sensiblement parallèlement à ladite plaque 3 et/ou à ladite paroi supérieur 8 et/ou à ladite première paroi inférieure 9 et/ou à ladite seconde paroi inférieure 11.

Selon l'invention, comme représenté aux figures 1 à 7 et 9, le dispositif de fixation 1 comprend en outre une première butée de blocage 12 pour ledit premier longeron 6, disposée en regard de la surface d'appui 10 pour que ledit premier longeron 6 puisse être interposé entre ladite surface d'appui 10 et ladite première butée de blocage 12 afin de limiter ou interdire le déplacement dudit premier longeron 6 selon une première direction D1. Ainsi, ladite première butée de blocage 12 et ladite surface d'appui 10 sont avantageusement conçues pour pouvoir être placées de part et d'autre dudit premier longeron 6 afin d'empêcher ou de borner son mouvement (par exemple de translation) selon ladite première direction D1. En d'autres termes encore, ladite première butée de blocage 12 est avantageusement conçue pour limiter ou interdire l'éloignement dudit premier longeron 6 vis-à-vis de ladite surface d'appui 10 selon ladite première direction D1, et inversement, ladite surface d'appui 10 est de manière avantageuse conçue pour limiter ou interdire l'éloignement dudit premier longeron 6 vis-à-vis de ladite première butée de blocage 12 selon ladite première direction D1.

De façon préférentielle, comme illustré aux figures 1 à 7 et 9, ladite première butée de blocage 12 présente une première surface de butée 13 destinée à être positionnée sensiblement parallèlement à ladite plaque 3. Plus avantageusement encore, ladite première surface de butée 13 est sensiblement plane et destinée à être positionnée parallèlement à, en regard de et/ou en contact de ladite paroi supérieure 8 dudit premier longeron 6.

De façon avantageuse, ladite surface d'appui 10 est sensiblement parallèle à ladite première surface de butée 13.

De façon particulièrement avantageuse, comme illustré aux figures 1 à 6 et 9, le dispositif de fixation 1 comprend un moyen de serrage 14 conçu pour que ladite première butée de blocage 12 puisse exercer sur ledit premier longeron 6 une force, selon ladite première direction D1, vers ladite surface d'appui 10, afin que ladite première butée de blocage 12 puisse presser ledit premier longeron 6 contre ladite surface d'appui 10. Ainsi, ledit moyen de serrage 14 est avantageusement conçu pour déplacer ladite première butée de blocage 12 de façon à serrer ou pincer ledit premier longeron 6 entre cette dernière et ladite surface d'appui 10, assurant de préférence un blocage par pression dudit premier longeron 6 au moins selon la première direction D1. En d'autres termes, ledit moyen de serrage 14 permet de manière préférentielle de compresser et/ou d'enserrer ledit premier longeron 6 entre ladite première surface de butée 13 et ladite surface d'appui 10.

Par exemple, comme illustré aux figures 1 à 6 et 9, ledit moyen de serrage 14 comprend au moins une vis 15.

Selon l'invention également, le dispositif de fixation 1 comprend en outre une deuxième butée de blocage 16 pour ledit premier longeron 6.

De préférence, ladite deuxième butée de blocage 16 présente une deuxième surface de butée 17 sensiblement perpendiculaire à ladite première surface de butée 13. De manière avantageuse, ladite deuxième surface de butée 17 est destinée à être positionnée sensiblement perpendiculairement à ladite plaque 3.

De façon avantageuse, ladite surface d'appui 10 est sensiblement perpendiculaire à ladite deuxième surface de butée 17.

Avantageusement, comme illustré aux exemples des figures 1 à 5 et 9, ledit premier longeron 6 comprend une paroi extérieure 18 et/ou une paroi intérieure 19, ladite paroi extérieure 18 et/ou ladite paroi intérieure 19 étant de préférence destinée(s) à être positionnée(s) sensiblement perpendiculairement à ladite plaque 3. Ladite paroi extérieure 18 et ladite paroi intérieure 19 sont avantageusement parallèles et à distance l'une de l'autre, mais peuvent alternativement être confondues, c'est-à-dire ne constituer qu'un seul même élément d'un seul tenant. De manière préférentielle, ladite paroi intérieure 19 est destinée à être positionnée plus près de l'intérieur du panneau 2 que ladite paroi extérieure 18. Plus préférentiellement encore, ladite paroi extérieure 18 et/ou ladite paroi intérieure 19 est/sont sensiblement rigide(s) et plane(s), et forme(nt) un élément d'entretoise reliant ladite paroi supérieure 8 et ladite seconde paroi inférieure 11 (ainsi que, plus avantageusement encore, ladite première paroi inférieure 9), les maintenant dans un écartement fixe. Ainsi, lesdites première et seconde parois inférieures 9, 11 et lesdites parois extérieure 18 et intérieure 19 définissent un espace interne, de préférence à la manière d'une portion de tube par exemple de section rectangulaire.

De façon préférentielle, ladite deuxième surface de butée 17 est sensiblement plane et destinée à être positionnée parallèlement, en regard et/ou en contact de ladite paroi extérieure 18, de manière à pouvoir venir en butée contre cette dernière.

Selon l'invention, le dispositif de fixation 1 comprend également au moins une troisième butée de blocage 20 pour ledit premier longeron 6, disposée en regard de la deuxième butée de blocage 16 pour que ledit premier longeron 6 puisse être interposé entre lesdites deuxième et troisième butées de blocage 16, 20 afin de limiter ou interdire le déplacement dudit premier longeron 6 selon une seconde direction D2 sensiblement perpendiculaire à ladite première direction D1. Ainsi, lesdites deuxième et troisième butées de blocage 16, 20 sont avantageusement conçues pour pouvoir être placées de part et d'autre dudit premier longeron 6 (ou d'une partie de celui-ci, en particulier de part et d'autre de ladite paroi extérieure 18 et/ou de ladite paroi intérieure 19) afin d'empêcher ou de borner le mouvement (par exemple de translation) dudit premier longeron 6 selon ladite seconde direction D2. En d'autres termes encore, ladite deuxième butée de blocage 16 est avantageusement conçue pour limiter ou interdire l'éloignement dudit premier longeron 6 vis-à-vis de ladite troisième butée 20 selon ladite seconde direction D2, et inversement, ladite troisième butée 20 est de manière avantageuse conçue pour limiter ou interdire l'éloignement dudit premier longeron 6 vis-à-vis de ladite deuxième butée de blocage 16 selon ladite seconde direction D2.

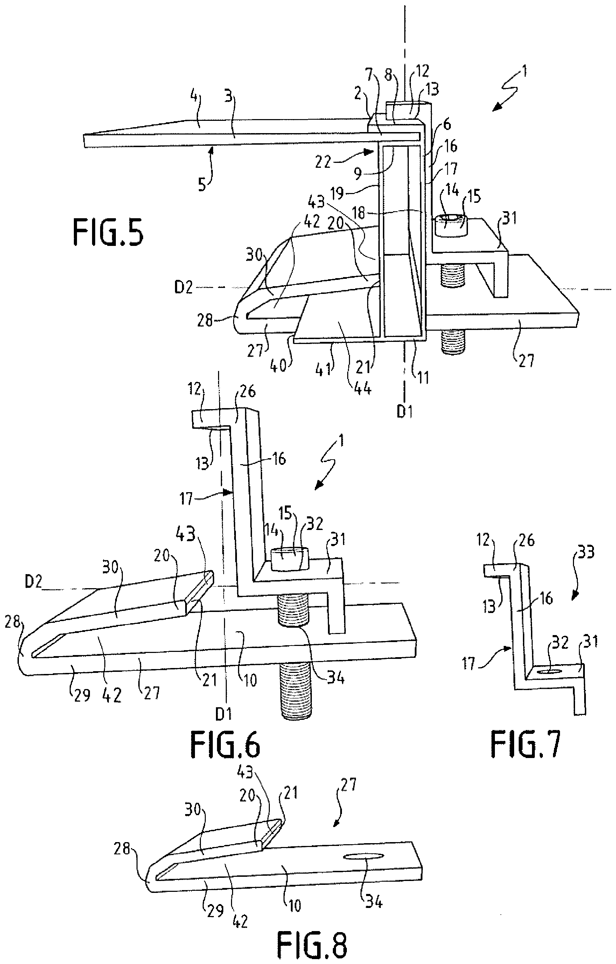

De manière préférentielle, comme illustré aux figures à l'exception de la figure 7, ladite troisième butée de blocage 20 présente une troisième surface de butée 21, cette dernière étant plus préférentiellement encore sensiblement perpendiculaire à ladite surface d'appui 10. Alternativement, ladite troisième butée de blocage 20 présente une arrête de butée.

De préférence, ledit premier longeron 6 comporte une face intérieure 22 sensiblement tournée vers l'intérieur du panneau 2. Par exemple, ladite face intérieure 22 est formée par une face de ladite paroi intérieure 19 (ou alternativement de ladite paroi extérieure 18), comme illustré aux figures 1 à 5 et 9, ladite face intérieure 22 étant avantageusement tournée vers ledit second longeron.

De façon avantageuse, ladite troisième butée de blocage 20 (ou plus précisément ladite troisième surface de butée 21 ou ladite arête de butée, par exemple) est destinée à être positionnée en regard de ladite face intérieure 22, de manière à limiter ou interdire l'éloignement dudit premier longeron 6 vis-à-vis de ladite deuxième butée 18 selon ladite seconde direction D2.

Avantageusement, ladite troisième butée de blocage 20 (ou plus précisément ladite troisième surface de butée 21 ou ladite arête de butée, par exemple) est destinée à coopérer avec face intérieure 22, cette dernière s'étendant de préférence sensiblement perpendiculairement à ladite plaque 3 et/ou parallèlement à ladite troisième surface de butée 21.

Selon l'invention, comme illustré aux figures 1 à 5 et 9, ledit premier longeron 6 comprend une aile 41 s'étendant de préférence en saillie à partir de ladite face intérieure 22 et/ou de ladite paroi intérieure 19. Toujours selon l'invention, ladite aile 41 s'étend en direction de l'intérieur du panneau 2, ladite aile 41 étant ainsi avantageusement sensiblement parallèle à ladite paroi supérieure 8 et/ou à ladite première paroi inférieure 9 et/ou à ladite seconde paroi inférieure 9, 11, ladite aile 41 étant par ailleurs de façon avantageuse destinée à être positionnée sensiblement parallèlement à ladite plaque 3. Ladite aile 41 s'étend avantageusement de manière sensiblement parallèle à ou confondue avec ladite seconde direction D2, c'est-à-dire que, de manière tout aussi avantageuse, ladite aile 41 s'étend sensiblement selon un plan moyen respectif sensiblement parallèle à ladite seconde direction D2, ou bien encore que ladite seconde direction D2 est incluse dans ledit plan moyen de l'aile 41. De manière préférentielle, ladite aile 41 est sensiblement perpendiculaire à ladite paroi intérieure 19, à ladite face intérieure 22 et/ou à ladite paroi extérieure 18. Préférentiellement, ladite aile 41 est sensiblement plane, s'étend dans le prolongement de ladite seconde paroi inférieure 11, et/ou est venue de matière avec celle-ci. De façon avantageuse, ladite aile 41 est ainsi destinée à venir s'appuyer, c'est-à-dire venir en contact, et/ou se reposer, sur ladite surface d'appui 10, cette dernière étant donc destinée à supporter l'aile 41, celle-ci faisant en substance office de base pour ledit premier longeron 6 (et donc faisant office d'embase pour le reste du premier longeron 6). Avantageusement, ladite aile 41 comprend un bord libre 40, lequel est par exemple tourné vers l'intérieur dudit panneau 2 et/ou vers le second longeron de l'autre côté dudit panneau 2, à l'opposé du premier longeron 6. Par exemple, ledit bord libre 40 forme ladite face intérieure 22 ou une partie de celle-ci.

De préférence, ladite surface d'appui 10 est venue de matière avec ladite troisième butée de blocage 20. Plus précisément, ladite surface d'appui 10 est avantageusement venue de matière avec la partie du dispositif de fixation 1 formant ladite troisième butée de blocage 20, à savoir de préférence la deuxième pièce 27 et même plus précisément la première portion 29, qui seront détaillées ci-après.

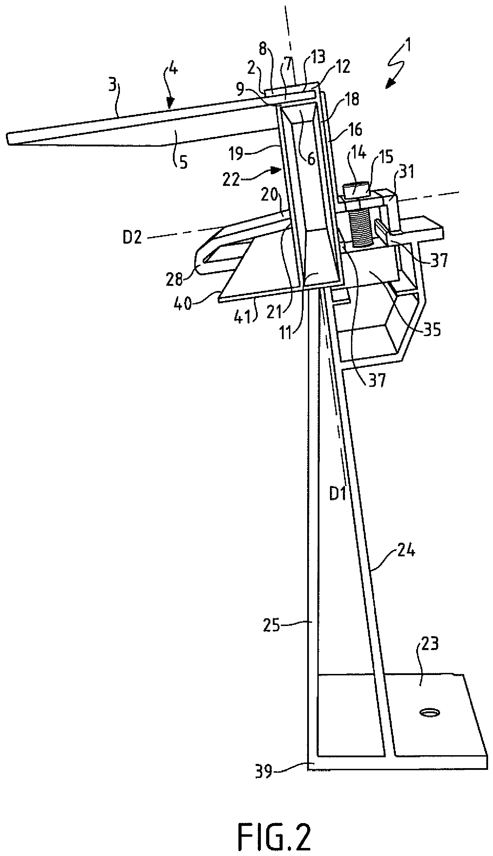

De manière préférentielle, ladite surface d'appui 10 est destinée à être solidarisée audit bâti 38. Par exemple, comme illustré aux figures 1 à 4, le dispositif de fixation 1 comprend une platine de fixation 39 destinée à être solidarisée audit bâti 38, la surface d'appui 10 étant destinée à être solidarisée à ladite platine de fixation 39 ou étant venue de matière avec cette dernière. Par exemple, ladite platine de fixation 39 comprend au moins un pied 23 sensiblement plat et deux entretoises de fixation 24, 25 reliées audit pied 23 lesdites deux entretoises de fixation 24, 25 s'étendant par exemple au moins du pied 23 jusqu'à ladite surface d'appui 10, pour maintenir cette dernière en place. Par exemple, comme illustré aux figures 2 et 4, ledit pied 23 est destiné à être vissé ou riveté au bâti 38.

Préférentiellement, comme illustré aux figures à l'exception de la figure 8, et particulièrement visible aux figures 6 et 7, le dispositif de fixation 1 comprend également au moins une première pièce 26 sensiblement rigide présentant une forme en L, ladite première pièce 26 étant destinée à coopérer avec ledit premier longeron 6 du côté de l'angle droit de ladite forme en L, de manière à ce qu'une première barre de ladite forme en L forme ladite première butée de blocage 12 et une seconde barre de ladite forme en L forme ladite deuxième butée blocage 16. Ainsi, ladite première pièce 26 présente avantageusement un angle sensiblement droit, et est de manière particulièrement préférentielle destinée à venir en contact, du côté de son angle droit, avec ledit premier longeron 6, lequel présente par exemple une forme d'angle droit complémentaire de l'angle droit de ladite première pièce 26, ladite forme en angle droit complémentaire étant en l'occurrence de préférence formée par ladite paroi supérieure 8 et ladite paroi extérieure 18. En effet, l'association de ladite paroi supérieure 8 et de ladite paroi extérieure 18 forme avantageusement un coin présentant un angle sensiblement droit.

Selon l'invention, comme illustré aux figures à l'exception de la figure 7, et particulièrement visible aux figures 6 et 8, le dispositif de fixation 1 comprend en outre au moins une pièce 27 formant un coude 28, ladite pièce 27 comportant elle-même au moins une première portion 29 d'un côté du coude 28, et une seconde portion 30 de l'autre côté du coude 28, ladite pièce 27 formant un logement 42 délimité par ledit coude 28 et lesdites première et seconde portions 29, 30, ledit logement 42 étant destiné à accueillir au moins en partie, voire en totalité, ladite aile 41. Plus précisément, de façon avantageuse, le dispositif de fixation 1 comprend en outre au moins une deuxième pièce 27 (formant ladite pièce 27 mentionnée ci-avant), préférentiellement sensiblement rigide, formant un coude 28, ladite deuxième pièce 27 comportant elle-même au moins une première portion 29 d'un côté du coude 28, et une seconde portion 30 de l'autre côté du coude 28. Ladite seconde portion 30 présente, selon une variante de réalisation préférée illustrée aux figures (à l'exception de la figure 7), une extrémité libre 43 formant ladite troisième butée de blocage 20 (ainsi que, par exemple, ladite troisième surface de butée 21). Selon d'autres variantes de réalisation qui seront détaillées ci-après, la troisième butée de blocage 20 est formée par une autre partie de la deuxième pièce 27 (par exemple l'intérieur du coude 28) que l'extrémité libre 43, ou bien encore par une combinaison d'une autre partie de la deuxième pièce 27 (par exemple l'intérieur du coude 28) que l'extrémité libre 43 et ladite extrémité libre 43.

Ainsi, de manière générale, ladite deuxième pièce 27, grâce à son coude 28, est avantageusement conçue pour former une butée, et plus avantageusement encore conçue pour former ladite troisième butée de blocage 20, de façon à, comme décrit précédemment, limiter ou empêcher le déplacement dudit longeron 6 selon ladite seconde direction D2, et ce en association avec ladite deuxième butée de blocage 16.

De manière avantageuse, ladite deuxième pièce 27, grâce au coude 28, forme ladite troisième butée de blocage 20. En d'autres termes, de façon préférentielle, ladite deuxième pièce 27 présente, grâce au coude 28, une forme particulière, par exemple avec un profil en crochet, courbé, arqué, ou coudé, permettant de former ladite troisième butée de blocage 20 de manière particulièrement efficace, comme on le verra encore par la suite. En d'autres termes encore, ladite deuxième pièce 27 comprend avantageusement un profil (ou une section) présentant au moins une forme en U ou en V (ou en crochet), l'une des deux barres de la forme en U ou en V formant sensiblement au moins en partie ladite première portion 29, l'autre des deux barres de la forme en U ou en V formant au moins en partie ladite seconde portions 30, et la base (ou la partie basse) de la forme en U ou en V formant au moins en partie ledit coude 28. De façon avantageuse, ladite deuxième pièce 27 est destinée à être reliée audit bâti 38, par exemple via ladite platine de fixation 39.

De manière avantageuse, comme illustré aux figures 1 à 6, 8 et 9, ladite première portion 29 comprend au moins en partie, voire en totalité, ladite surface d'appui 10. Ainsi, ledit coude 28 est de préférence destiné à « *contourner* » au moins en partie, voire en totalité ladite aile 41 (et en particulier le bord libre 40), pour que lesdites première et seconde portions 29, 30 se retrouvent au moins en partie séparées l'une de l'autre par ladite aile 41, laquelle est par exemple destinée à s'étendre vers ledit coude 28. En d'autres termes, ladite deuxième pièce 27 forme avantageusement un logement 42 (comme évoqué précédemment) délimité par ledit coude 28 et lesdites première et seconde portions 29, 30, ledit logement 42 étant destiné à accueillir au moins en partie, voire en totalité, ladite aile 41, par exemple ledit bord libre 40. Le coude 28 (et plus précisément l'intérieur dudit coude 28) est avantageusement destiné à être positionné en regard et/ou en contact de ladite aile 41, et plus précisément d'une extrémité de ladite aile 41, notamment dudit bord libre 40. De préférence, l'intérieur dudit coude 28 est formé par la surface du coude 28 située du côté dudit logement 42, ledit coude 28 formant de manière générale un angle aigu. Par exemple, lesdites première et seconde portions 29, 30 sont sensiblement planes, et s'inscrivent chacune dans un plan moyen respectif se coupant selon un angle aigu du côté dudit logement 42. Préférentiellement, l'intérieur du coude 28 est donc situé du côté dudit angle aigu formé par le coude 28 lui-même et/ou lesdites première et seconde portions 29, 30, lesquelles prolongent en substance ledit coude 28. Par exemple, ladite première portion 29 prolonge un côté (ou une patte) dudit coude 28 tandis que ladite seconde portion 30 prolonge l'autre côté (ou l'autre patte) du coude 28, qui comprend donc deux côtés ou pattes distinct(e)s formant en eux ou elles un angle aigu. Le logement 42 est, de façon avantageuse, formé par le creux formé par le coude 28 et lesdites première et seconde portions 29, 30 prolongeant ce dernier.

Ladite deuxième pièce 27, grâce à son coude 28, est ainsi de préférence conçue, selon un exemple, pour amener une partie de ladite seconde portion 30, et notamment ladite extrémité libre 43 de ladite seconde portion 30, au contact ou au voisinage immédiat de ladite face intérieure 22, par exemple au contact ou au voisinage immédiat de ladite paroi intérieure 19 (ou selon un autre exemple non représenté, pour amener l'intérieur du coude 28 au contact ou au voisinage immédiat de l'aile 41 et plus précisément du bord libre 40 de l'aile 41), pour former une butée (en substance ladite troisième butée de blocage 20) limitant ou empêchant le déplacement dudit longeron 6 selon ladite seconde direction D2, en association avec ladite deuxième butée de blocage 16.

Le concept général de l'invention est en substance que la troisième butée de blocage 20, et plus précisément la deuxième pièce 27, va agir, grâce à sa forme coudée (et plus précisément grâce au coude 28 prolongé au moins par ladite seconde portion 30) comme un « crochet » en retenant le premier longeron 6 à l'opposé et en complément de la deuxième butée de blocage 16, et ce en passant d'abord en-dessous du longeron 6, c'est-à-dire plus généralement en-dessous du support de ladite plaque 3, ou plus précisément en-dessous de ladite aile 41, et en-dessous de la plaque 3, puis en prévoyant ensuite un retour ou un coude 28 se prolongeant par ladite seconde portion 30 sensiblement vers la deuxième butée de blocage 16, c'est-à-dire vers l'extérieur du panneau 2, le retour ou coude 28, avec lesdites première et seconde portions 29, 30 qui le prolongent, formant alors avantageusement un logement 42 emprisonnant au moins en partie l'aile 41 du premier longeron 6 (ainsi que de préférence le bord libre 40). Ladite troisième butée de blocage 20 assure, grâce à cette configuration, une excellente solidarisation du longeron 6 et donc du panneau solaire 2 au dispositif de fixation 1, puisque ladite troisième butée de blocage 20 peut alors retenir ledit premier longeron 6 à la fois en enfermant ladite aile 41 au sein du logement 42 mais également en exerçant une force selon la seconde direction D2 vers ladite deuxième butée de blocage 16 directement sur ladite face intérieure 22, ladite paroi intérieure 19, ladite aile 41, et/ou ledit bord libre 40 (selon les variantes de réalisation).

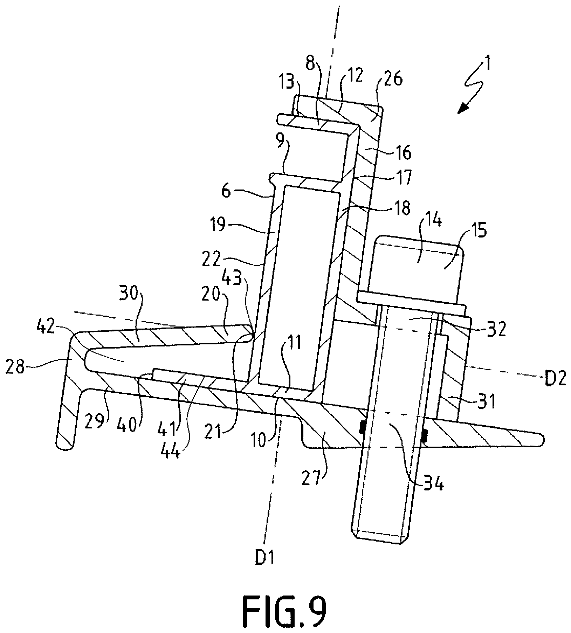

De façon avantageuse, comme illustré aux figures et particulièrement visible à la figure 9, ladite aile 41 comprend une face supérieure 44, laquelle est destinée à être tournée vers le haut et/ou vers ladite plaque 3, et/ou à être positionnée parallèlement à ladite plaque 3, à ladite seconde direction D2, à un plan moyen d'extension de ladite aile 41, à ladite paroi supérieure 8, à ladite première surface de butée 13, à ladite surface d'appui 10, et/ou à ladite seconde paroi inférieure 11. De préférence, ladite seconde portion 30 (et optionnellement ledit coude 28) est destinée à être positionnée sensiblement au moins en partie en regard de ladite face supérieure 44, de manière à former une butée pour ladite face supérieure 44 et plus généralement pour ladite aile 41, afin d'empêcher cette dernière, et donc ledit premier longeron 6, de s'éloigner de la surface d'appui 10 selon ladite première direction D1. Ainsi, ladite seconde portion 30 et/ou ledit coude 28 forme(nt) avantageusement une quatrième butée de blocage pour ledit premier longeron 6, disposée en regard de la surface d'appui 10 pour que ledit premier longeron 6, et plus précisément ladite aile 41, puisse être interposé(e) au moins en partie (voire en totalité dans le cas de ladite aile 41) entre ladite surface d'appui 10 (avantageusement formée au moins en partie par ladite première portion 29) et ladite quatrième butée de blocage afin de limiter ou interdire le déplacement dudit premier longeron 6 selon ladite première direction D1. Cette configuration constitue une sécurité supplémentaire encore pour garantir, en substance, que le panneau solaire 2, plus précisément le support de ce dernier, et plus précisément encore le premier longeron 6, reste solidarisé au dispositif de fixation 1 de l'invention.

De manière préférentielle, comme illustré aux figures à l'exception de la figure 8, et particulièrement visible aux figures 6, 7 et 9, le dispositif de fixation 1 comprend également au moins une troisième pièce 31 sensiblement rigide présentant une forme en L, comportant elle-même au moins une lumière traversante 32 destinée à accueillir ladite vis 15 pour le serrage dudit premier longeron 6 entre ladite première butée de blocage 12 et ladite surface d'appui 10, ladite troisième pièce 31 étant solidaire de ladite première pièce 26. Plus préférentiellement encore, la forme en L de ladite troisième pièce 31 présente une extrémité solidaire d'une extrémité de la forme en L de ladite première pièce 26, lesdites deuxième et troisième pièces 26, 31 étant par exemple d'un seul tenant, formant une pièce unique 33, et présentant une forme de marches d'escalier.

Selon un premier exemple, comme illustré aux modes de réalisation des figures 5 à 9, ladite première portion 29 est en outre pourvue d'un trou 34 destiné à accueillir ladite vis 15 et à être positionné en regard de ladite lumière traversante 32 lorsque ledit moyen de serrage 14 est mis en œuvre.

Selon un autre exemple, comme illustré aux modes de réalisations des figures 1 à 4, le dispositif de fixation 1 comprend également un bloc 35 et des moyens de blocage 37 dudit bloc 35, ce dernier étant pourvu d'une cavité 36, laquelle est destinée à accueillir ladite vis 15 et à être positionnée en regard de ladite lumière traversante 32 lorsque ledit moyen de serrage 14 est mis en place, ledit bloc 35 étant conçu pour être bloqué contre les moyens de blocage 37 lorsque le moyen de serrage 14 est mis en place. De manière avantageuse, lesdits moyens de blocage 37 sont venus de matière avec ladite platine de fixation 39 et s'interposent entre ledit bloc 35 et ladite troisième pièce 31 (ou ladite pièce unique 33).

Ainsi, de manière avantageuse, l'autre extrémité de la forme en L de ladite troisième pièce 31 est destinée à se retrouver en appui sur ladite platine de fixation 39 (comme illustré aux figures 1 à 4) ou ladite première portion 29 (comme illustré aux figures 5 à 9) lorsque ledit moyen de serrage 14 est mis en œuvre.

De préférence, lorsqu'on met en place ladite vis 14 dans ladite lumière traversante 32 et ledit trou 34 ou ladite cavité 35, ladite pièce unique 33 est d'un côté en appui sur ledit premier longeron 6 et plus précisément sur ladite paroi supérieure 8 dudit longeron 6, et de l'autre en appui sur un élément lié au bâti 38 (par exemple ladite première portion 29 ou ladite platine de fixation 39), pressant ledit premier longeron 6 contre ladite surface d'appui 10 à la manière d'une bride ou « *clamp ».*

De manière avantageuse, lesdits moyens de blocage 37 sont des rebords, par exemple des rebords venus de matière avec ladite platine de fixation 39.

Un exemple de mise en place du dispositif de fixation 1 précédemment décrit va maintenant être exposé, sans que cet exemple ne constitue une quelconque limitation quant à la mise en œuvre du dispositif de fixation 1 de l'invention. Selon cet exemple, on désire fixer le panneau 2 sur le bâti 38, le panneau 2 comprenant la plaque 3 et le support de celle-ci. Au moins une partie, voire la totalité, de l'aile 41, et plus précisément son bord libre 40, est engagé(e) dans le logement 42 formé par le coude 28 de la deuxième pièce 27, la seconde paroi inférieure 11 reposant alors, grâce au poids du panneau 2, sur la surface d'appui 10 elle-même formée par une surface de la première portion 29 de la deuxième pièce 27. Le premier longeron 6 est ensuite déplacé selon la seconde direction D2 vers le coude 28 de manière à ce que la troisième butée de blocage 20, et plus précisément la troisième surface de butée 21, vienne buter contre la face intérieure 22 du longeron 6. Après ceci, on plaque la première pièce 26 présentant une forme en L du côté de son angle droit contre les parois supérieure 8 et extérieure 18 du longeron 6, les parois supérieure 8 et extérieure 18 étant respectivement en contact avec les première et deuxième butées de blocage 12, 16 (et plus précisément avec les première et deuxième surfaces de butée 13, 17, respectivement). A ce stade, la troisième pièce 31 présentant une forme en L, solidaire de la première pièce 26, repose soit sur une partie de la première portion 29 qu'on peut assimiler à un prolongement de la surface d'appui 10, comme illustré aux figures 5 à 8, soit sur une partie de la platine de fixation 39, par exemple une partie de la platine de fixation 39 venue de matière avec l'une des entretoises de fixation 24, comme illustré aux figures 1 à 4. Toujours à ce stade, on place la lumière traversante 32 en regard du trou 34 (par exemple traversant) de la première portion 29, comme illustré aux figures 5 à 8, ou en regard de la cavité 36 (par exemple traversante) du bloc 35, puis on introduit la vis 15 d'abord dans la lumière traversante 32 puis dans le trou 34 ou dans la cavité 36, de manière à exercer une force pressant la troisième pièce 31 contre la première portion 29 ou la platine de fixation 39. La troisième pièce 31 étant liée à la première pièce 26, la force de pression va également être exercée par la première butée de blocage 12 (et plus précisément la première surface de butée 13) contre le premier longeron 6 et plus précisément contre la paroi supérieure 8 du longeron 6, pressant également ce dernier contre la surface d'appui 10. Le premier longeron 6 étant d'une part fixé, selon la première direction D1, par pression de la première butée de blocage 12, en appui sur la surface d'appui 10, et d'autre part bloqué, ou limité en mouvement, selon la direction D2, par et entre les deuxième et troisième butées de blocage 16, 20, il ne peut s'échapper de l'emprise du dispositif de fixation 1 sans le démontage de celui-ci (et notamment le dévissage de la vis 15).

Alternativement, selon un autre mode de réalisation non illustré, l'intérieur du coude 28 forme ladite troisième butée de blocage 20 (ainsi que, par exemple, ladite troisième surface de butée 21), l'aile 41, et plus précisément le bord libre 40, venant par exemple en contact avec le coude 28 et/ou la seconde portion 30 du côté dudit logement 42. En d'autres termes, selon cette dernière variante de réalisation, lorsque le premier longeron 6 est amené selon la seconde direction D2 vers le coude 28, ce dernier est destiné à former directement une butée de blocage du longeron 6, et plus précisément ladite troisième butée de blocage 20. Plus avantageusement, le coude 28 (ou plus précisément l'intérieur du coude 28), est destiné à former une butée de blocage de l'aile 41, encore plus avantageusement du bord libre 40 de cette dernière. En d'autres termes, selon cette dernière alternative, le bord libre 40 forme de préférence au moins en partie la face intérieure 22, et le coude 28 (et plus précisément l'intérieur du coude 28) forme la troisième butée de blocage 20 (et plus précisément la troisième surface de butée 21 ou l'arête de butée). Ainsi, selon cette dernière alternative, la deuxième pièce 27 forme toujours avantageusement un « *retour* » (et donc le coude 28, prolongé par ladite seconde portion 30) en direction de l'extérieur du panneau 2 et/ou de la deuxième butée de blocage 16 comme dans les autres modes de réalisation mentionnés ci-avant, le « *retour* » étant en substance formé par le coude 28 et/ou la seconde portion 30 qui prolonge ce dernier, mais l'extrémité libre 43 de cette dernière n'est pas forcément destinée à former une butée limitant ou empêchant le déplacement du longeron 6 (et plus précisément de la paroi intérieure 19) selon la seconde direction D2. Par exemple, dans ce dernier mode de réalisation, la seconde portion 30 est de préférence plus courte et/ou l'aile 41 est avantageusement plus longue (c'est-à-dire s'étend plus encore vers l'intérieur du panneau 2) que dans les modes de réalisation mentionnés ci-avant où l'extrémité libre 43 forme la troisième butée de blocage 20.

Toute combinaison des différentes variantes et exemples susmentionnés est bien évidemment possible, au regard de ce qu'il semble pertinent dans le domaine technique concerné pour réaliser un dispositif de fixation 1. Par exemple, on peut tout à fait envisager une possible configuration d'un dispositif de fixation 1 selon l'invention, dans lequel ladite troisième butée de blocage 43 est formée à la fois par l'extrémité libre 43 de la seconde portion 30 et l'intérieur du coude 28, l'extrémité libre 43 et l'intérieur du coude 28 participant tous les deux concomitamment ou l'un indépendamment de l'autre à limiter ou interdire le déplacement dudit premier longeron 6 selon ladite seconde direction D2.

L'invention concerne, selon un autre aspect, un système de fixation d'une plaque 3 formant capteur solaire à un bâti 38, comprenant au moins un support pour ladite plaque 3 destiné à être attaché à cette dernière, ledit support comportant lui-même au moins un premier longeron 6, comme décrit ci-avant, ledit premier longeron 6 comprenant une aile 41 s'étendant en direction de l'intérieur du panneau 2.

Ledit système de fixation selon l'invention comprend également un dispositif de fixation 1, conforme à la description qui précède, dudit support à un bâti 38, et qui comprend au moins :
▪ une surface d'appui 10 contre laquelle ledit premier longeron 6 est destiné à venir reposer sous l'effet du poids du panneau solaire 2,
▪ une première butée de blocage 12 pour ledit premier longeron 6, disposée en regard de la surface d'appui 10 pour que ledit premier longeron 6 puisse être interposé entre ladite surface d'appui 10 et ladite première butée de blocage 12 afin de limiter ou interdire le déplacement dudit premier longeron 6 selon une première direction D1, et
▪ une deuxième butée de blocage 16 pour ledit premier longeron 6.

Selon l'invention, le dispositif de fixation 1 comprend également, comme décrit ci-avant, au moins une troisième butée de blocage 20 pour ledit premier longeron 6, disposée en regard de la deuxième butée de blocage 16 pour que ledit premier longeron 6 puisse être interposé entre lesdites deuxième et troisième butées de blocage 16, 20 afin de limiter ou interdire le déplacement dudit premier longeron 6 selon une seconde direction D2 sensiblement perpendiculaire à ladite première direction D1. Selon l'invention également, le dispositif de fixation 1 comprend en outre au moins une pièce 27 (de préférence formée par ladite deuxième pièce 27) formant un coude 28, ladite (deuxième) pièce 27 comportant elle-même au moins une première portion 29 d'un côté du coude 28, et une seconde portion 30 de l'autre côté du coude 28, ladite (deuxième) pièce 27 formant un logement 42 délimité par ledit coude 28 et lesdites première et seconde portions 29, 30, ledit logement 42 étant destiné à accueillir au moins en partie, voire en totalité, ladite aile 41.

L'invention concerne, selon encore un autre aspect, un ensemble de conversion du rayonnement solaire en énergie électrique ou thermique, comprenant au moins un panneau solaire 2 comme décrit ci-avant, comprenant donc lui-même au moins une plaque 3 formant capteur solaire et un support pour ladite plaque 3 attaché à cette dernière, ledit support comportant lui-même au moins un premier longeron 6, tel que décrit précédemment, ledit premier longeron 6 comprenant une aile 41 s'étendant en direction de l'intérieur du panneau 2.

Ledit ensemble de conversion comprend en outre un dispositif de fixation 1, conforme à la description qui précède, dudit panneau solaire 2 à un bâti 38, ledit dispositif de fixation 1 comprenant au moins :
▪ une surface d'appui 10 contre laquelle ledit premier longeron 6 est destiné à venir reposer sous l'effet du poids du panneau solaire 2,
▪ une première butée de blocage 12 pour ledit premier longeron 6, disposée en regard de la surface d'appui 10 pour que ledit premier longeron 6 puisse être interposé entre ladite surface d'appui 10 et ladite première butée de blocage 12 afin de limiter ou interdire le déplacement dudit premier longeron 6 selon une première direction D1, et
▪ une deuxième butée de blocage 16 pour ledit premier longeron 6.

Le dispositif de fixation 1 comprend également, comme décrit ci-avant, au moins une troisième butée de blocage 20 pour ledit premier longeron 6, disposée en regard de la deuxième butée de blocage 16 pour que ledit premier longeron 6 puisse être interposé entre lesdites deuxième et troisième butées de blocage 16, 20 afin de limiter ou interdire le déplacement dudit premier longeron 6 selon une seconde direction D2 sensiblement perpendiculaire à ladite première direction D1. Selon l'invention également, le dispositif de fixation 1 comprend en outre au moins une pièce 27 (de préférence formée par ladite deuxième pièce 27) formant un coude 28, ladite (deuxième) pièce 27 comportant elle-même au moins une première portion 29 d'un côté du coude 28, et une seconde portion 30 de l'autre côté du coude 28, ladite (deuxième) pièce 27 formant un logement 42 délimité par ledit coude 28 et lesdites première et seconde portions 29, 30, ledit logement 42 étant destiné à accueillir au moins en partie, voire en totalité, ladite aile 41.

## Revendications

1. Dispositif de fixation (1) d'un panneau solaire (2) à un bâti (38), ledit panneau solaire (2) comprenant au moins une plaque (3) formant capteur solaire et un support pour ladite plaque (3) attaché à cette dernière, ledit support comportant lui-même au moins un premier longeron (6), ledit premier longeron (6) comprenant une aile (41) s'étendant en direction de l'intérieur du panneau (2), ledit dispositif de fixation (1) comprenant au moins :
- une surface d'appui (10) contre laquelle ledit premier longeron (6) est destiné à venir reposer sous l'effet du poids du panneau solaire (2),
- une première butée de blocage (12) pour ledit premier longeron (6), disposée en regard de la surface d'appui (10) pour que ledit premier longeron (6) puisse être interposé entre ladite surface d'appui (10) et ladite première butée de blocage (12) afin de limiter ou interdire le déplacement dudit premier longeron (6) selon une première direction (D1),
- une deuxième butée de blocage (16) pour ledit premier longeron (6),
le dispositif de fixation (1) comprenant également au moins une troisième butée de blocage (20) pour ledit premier longeron (6), disposée en regard de la deuxième butée de blocage (16) pour que ledit premier longeron (6) puisse être interposé entre lesdites deuxième et troisième butées de blocage (16, 20) afin de limiter ou interdire le déplacement dudit premier longeron (6) selon une seconde direction (D2) sensiblement perpendiculaire à ladite première direction (D1), **caractérisé en ce que** le dispositif de fixation (1) comprend en outre au moins une pièce (27) formant un coude (28), ladite pièce (27) comportant elle-même au moins une première portion (29) d'un côté du coude (28), et une seconde portion (30) de l'autre côté du coude (28), ladite pièce (27) formant un logement (42) délimité par ledit coude (28) et lesdites première et seconde portions (29, 30), ledit logement (42) étant destiné à accueillir au moins en partie, voire en totalité, ladite aile (41).

2. Dispositif de fixation (1) selon la revendication précédente, **caractérisé en ce que** ladite première butée de blocage (12) présente une première surface de butée (13) destinée à être positionnée sensiblement parallèlement à ladite plaque (3), et **en ce que** ladite deuxième butée de blocage (16) présente une deuxième surface de butée (17) sensiblement perpendiculaire à ladite première surface de butée (13).

3. Dispositif de fixation (1) selon la revendication 1 ou 2, **caractérisé en ce que** ladite surface d'appui (10) est sensiblement parallèle à ladite première surface de butée (13).

4. Dispositif de fixation (1) selon l'une des revendications précédentes, **caractérisé en ce que** ledit premier longeron (6) comporte une face intérieure (22) sensiblement tournée vers l'intérieur du panneau (2), et **en ce que** ladite troisième butée de blocage (20) est destinée à être positionnée en regard de ladite face intérieure (22), de manière à limiter ou interdire l'éloignement dudit premier longeron (6) de ladite deuxième butée (20) selon ladite seconde direction (D2).

5. Dispositif de fixation (1) selon la revendication précédente, **caractérisé en ce que** ladite troisième butée de blocage (20) est destinée à coopérer avec ladite face intérieure (22), cette dernière s'étendant sensiblement perpendiculairement à ladite plaque (3).

6. Dispositif de fixation (1) selon l'une des revendications précédentes, **caractérisé en ce que** ladite surface d'appui (10) est venue de matière avec ladite troisième butée de blocage (20), et **en ce que** ladite surface d'appui (10) est destinée à être solidarisée audit bâti (38).

7. Dispositif de fixation (1) selon l'une des revendications précédentes, **caractérisé en ce qu'**il comprend également au moins une première pièce (26) sensiblement rigide présentant une forme en L, ladite première pièce (26) étant destinée à coopérer avec ledit premier longeron (6) du côté de l'angle droit de ladite forme en L, de manière à ce qu'une première barre de ladite forme en L forme ladite première butée de blocage (12) et une seconde barre de ladite forme en L forme ladite deuxième butée blocage (16).

8. Dispositif de fixation (1) selon l'une des revendications précédentes, **caractérisé en ce que** ladite seconde portion (30) présente une extrémité libre (43) formant ladite troisième butée de blocage (20).

9. Dispositif de fixation (1) selon l'une des revendications précédentes, **caractérisé en ce que** ladite première portion (29) comprend au moins ladite surface d'appui (10).

10. Dispositif de fixation (1) selon l'une des revendications précédentes, **caractérisé en ce qu'**il comprend un moyen de serrage (14) conçu pour que ladite première butée de blocage (12) puisse exercer sur ledit premier longeron (6) une force, selon ladite première direction (D1), vers ladite surface d'appui (10), afin que ladite première butée de blocage (12) puisse presser ledit premier longeron (6) contre ladite surface d'appui (10), et **en ce que** ledit moyen de serrage (14) comprend au moins une vis (15).

11. Dispositif de fixation (1) selon la revendication précédente et la revendication 7, **caractérisé en ce qu'**il comprend également au moins une troisième pièce (31) sensiblement rigide présentant une forme en L, comportant elle-même au moins une lumière traversante (32) destinée à accueillir ladite vis (15) pour le serrage dudit premier longeron (6) entre ladite première butée de blocage (12) et ladite surface d'appui (10), ladite troisième pièce (31) étant solidaire de ladite première pièce (26).

12. Dispositif de fixation (1) selon la revendication précédente, **caractérisé en ce que** ladite première portion (29) est en outre pourvue d'un trou (34) destiné à accueillir ladite vis (15) et à être positionné en regard de ladite lumière traversante (32) lorsque moyen de serrage (14) est mis en œuvre.

13. Dispositif de fixation (1) selon la revendication précédente ou la revendication 11, **caractérisé en ce qu'**il comprend également un bloc (35) et des moyens de blocage (37) dudit bloc (35), ce dernier étant pourvu d'une cavité (36), laquelle est destinée à accueillir ladite vis (15) et à être positionnée en regard de ladite lumière traversante (32) lorsque ledit moyen de serrage (14) est mis en place, ledit bloc (35) étant conçu pour être bloqué contre les moyens de blocage (37) lorsque le moyen de serrage (14) est mis en place.

14. Système de fixation d'une plaque (3) formant capteur solaire à un bâti (38), comprenant au moins :
- un support pour ladite plaque (3) destiné à être attaché à cette dernière, ledit support comportant lui-même au moins un premier longeron (6), ledit premier longeron (6) comprenant une aile (41) s'étendant en direction de l'intérieur du panneau (2), et
- un dispositif de fixation (1) dudit support à un bâti (38), comprenant lui-même au moins :
▪ une surface d'appui (10) contre laquelle ledit premier longeron (6) est destiné à venir reposer sous l'effet du poids du panneau solaire (2),
▪ une première butée de blocage (12) pour ledit premier longeron (6), disposée en regard de la surface d'appui (10) pour que ledit premier longeron (6) puisse être interposé entre ladite surface d'appui (10) et ladite première butée de blocage (12) afin de limiter ou interdire le déplacement dudit premier longeron (6) selon une première direction (D1),
▪ une deuxième butée de blocage (16) pour ledit premier longeron (6),
- le dispositif de fixation (1) comprenant également au moins une troisième butée de blocage (20) pour ledit premier longeron (6), disposée en regard de la deuxième butée de blocage (16) pour que ledit premier longeron (6) puisse être interposé entre lesdites deuxième et troisième butées de blocage (16, 20) afin de limiter ou interdire le déplacement dudit premier longeron (6) selon une seconde direction (D2) sensiblement perpendiculaire à ladite première direction (D1), **caractérisé en ce que** le dispositif de fixation (1) comprend en outre au moins une pièce (27) formant un coude (28), ladite pièce (27) comportant elle-même au moins une première portion (29) d'un côté du coude (28), et une seconde portion (30) de l'autre côté du coude (28), ladite pièce (27) formant un logement (42) délimité par ledit coude (28) et lesdites première et seconde portions (29, 30), ledit logement (42) étant destiné à accueillir au moins en partie, voire en totalité, ladite aile (41).

15. Ensemble de conversion du rayonnement solaire en énergie électrique ou thermique, comprenant au moins :
- un panneau solaire (2), comprenant lui-même au moins une plaque (3) formant capteur solaire et un support pour ladite plaque (3) attaché à cette dernière, ledit support comportant lui-même au moins un premier longeron (6), ledit premier longeron (6) comprenant une aile (41) s'étendant en direction de l'intérieur du panneau (2), et
- un dispositif de fixation (1) dudit panneau solaire (2) à un bâti (38), ledit dispositif de fixation (1) comprenant au moins :
▪ une surface d'appui (10) contre laquelle ledit premier longeron (6) est destiné à venir reposer sous l'effet du poids du panneau solaire (2),
▪ une première butée de blocage (12) pour ledit premier longeron (6), disposée en regard de la surface d'appui (10) pour que ledit premier longeron (6) puisse être interposé entre ladite surface d'appui (10) et ladite première butée de blocage (12) afin de limiter ou interdire le déplacement dudit premier longeron (6) selon une première direction (D1),
▪ une deuxième butée de blocage (16) pour ledit premier longeron (6),
le dispositif de fixation (1) comprenant également au moins une troisième butée de blocage (20) pour ledit premier longeron (6), disposée en regard de la deuxième butée de blocage (16) pour que ledit premier longeron (6) puisse être interposé entre lesdites deuxième et troisième butées de blocage (16, 20) afin de limiter ou interdire le déplacement dudit premier longeron (6) selon une seconde direction (D2) sensiblement perpendiculaire à ladite première direction (D1), **caractérisé en ce que** le dispositif de fixation (1) comprend en outre au moins une pièce (27) formant un coude (28), ladite pièce (27) comportant elle-même au moins une première portion (29) d'un côté du coude (28), et une seconde portion (30) de l'autre côté du coude (28), ladite pièce (27) formant un logement (42) délimité par ledit coude (28) et lesdites première et seconde portions (29, 30), ledit logement (42) étant destiné à accueillir au moins en partie, voire en totalité, ladite aile (41).

## Patentansprüche

1. Vorrichtung (1) zur Befestigung eines Solarpaneels (2) an einem Rahmen (38), wobei das genannte Solarpaneel (2) mindestens eine Platte (3), die einen Sonnenkollektor bildet, und eine Stütze für die genannte Platte (3), die an dieser Letzteren angebracht ist, umfasst, wobei die genannte Stütze selbst mindestens einen ersten Längsträger (6) umfasst, wobei der genannte erste Längsträger (6) einen Flügel (41) umfasst, der sich in der Richtung zum Inneren der Platte (2) erstreckt, wobei die genannte Befestigungsvorrichtung (1) mindestens umfasst:
- eine Anlagefläche (10), gegen die der genannte erste Längsträger (6) bestimmt ist, unter der Einwirkung des Gewichts des Solarpaneels (2) anzuliegen,
- einen ersten Blockierungsanschlag (12) für den genannten ersten Längsträger (6), der gegenüber der Anlagefläche (10) angeordnet ist, damit der genannte erste Längsträger (6) zwischen der genannten Anlagefläche (10) und dem genannten ersten Blockierungsanschlag (12) angeordnet werden kann, um die Verschiebung des genannten ersten Längsträgers (6) in einer ersten Richtung (D1) zu begrenzen oder zu verhindern,
- einen zweiten Blockierungsanschlag (16) für den genannten ersten Längsträger (6),
wobei die Befestigungsvorrichtung (1) auch mindestens einen dritten Blockierungsanschlag (20) für den genannten ersten Längsträger (6) umfasst, der gegenüber dem zweiten Blockierungsanschlag (16) angeordnet ist, damit der genannte erste Längsträger (6) zwischen dem genannten zweiten und dritten Blockierungsanschlag (16, 20) angeordnet werden kann, um die Verschiebung des genannten ersten Längsträgers (6) in einer zweiten Richtung (D2) im Wesentlichen rechtwinklig zur genannten ersten Richtung (D1) zu begrenzen oder zu verhindern, **dadurch gekennzeichnet, dass** die Befestigungsvorrichtung (1) außerdem mindestens ein Stück (27) umfasst, das eine Biegung (28) bildet, wobei das genannte Stück (27) selbst mindestens einen ersten Abschnitt (29) einer Seite der Biegung (28) und einen zweiten Abschnitt (30) der anderen Seite der Biegung (28) umfasst, wobei das genannte Stück (27) eine Aufnahme (42) bildet, die von der genannten Biegung (28) und dem genannten ersten und zweiten Abschnitt (29, 30) begrenzt wird, wobei die genannte Aufnahme (42) dazu bestimmt ist, mindestens teilweise, sogar zur Gänze, den genannten Flügel (41) aufzunehmen.

2. Befestigungsvorrichtung (1) nach dem vorhergehenden Anspruch, **dadurch gekennzeichnet, dass** der genannte erste Blockierungsanschlag (12) eine erste Anschlagfläche (13) aufweist, die dazu bestimmt ist, im Wesentlichen parallel zur genannten Platte (3) positioniert zu werden, und dadurch, dass der genannte zweite Blockierungsanschlag (16) eine zweite Anschlagfläche (17) im Wesentlichen rechtwinklig zur genannten ersten Anschlagfläche (13) aufweist.

3. Befestigungsvorrichtung (1) nach Anspruch 1 oder 2, **dadurch gekennzeichnet, dass** die genannte Anlagefläche (10) im Wesentlichen parallel zur genannten ersten Anschlagfläche (13) ist.

4. Befestigungsvorrichtung (1) nach einem der vorhergehenden Ansprüche, **dadurch gekennzeichnet, dass** der genannte erste Längsträger (6) eine Innenfläche (22) umfasst, die im Wesentlichen zum Inneren der Platte (2) gewandt ist, und dadurch, dass der genannte dritte Blockierungsanschlag (20) dazu bestimmt ist, gegenüber der genannten Innenfläche (22) positioniert zu werden, um die Wegbewegung des genannten ersten Längsträgers (6) von dem genannten zweiten Anschlag (20) in der genannten zweiten Richtung (D2) zu begrenzen oder zu verhindern.

5. Befestigungsvorrichtung (1) nach dem vorhergehenden Anspruch, **dadurch gekennzeichnet, dass** der genannte dritte Blockierungsanschlag (20) dazu bestimmt ist, mit der genannten Innenfläche (22) zusammenzuwirken, wobei sich diese Letztere im Wesentlichen rechtwinklig zur genannten Platte (3) erstreckt.

6. Befestigungsvorrichtung (1) nach einem der vorhergehenden Ansprüche, **dadurch gekennzeichnet, dass** die genannte Anlagefläche (10) einteilig mit dem genannten dritten Blockierungsanschlag (20) gebildet ist, und dadurch, dass die genannte Anlagefläche (10) dazu bestimmt ist, mit dem genannten Rahmen (38) fest verbunden zu werden.

7. Befestigungsvorrichtung (1) nach einem der vorhergehenden Ansprüche, **dadurch gekennzeichnet, dass** sie auch mindestens ein erstes im Wesentlichen starres Stück (26) mit der Form eines L umfasst, wobei das genannte erste Stück (26) dazu bestimmt ist, mit dem genannten ersten Längsträger (6) auf der Seite des rechten Winkels der genannten Form eines L derart zusammenzuwirken, dass ein erster Balken der genannten Form eines L den genannten ersten Blockierungsanschlag (12) bildet, und ein zweiter Balken der genannten Form eines L den genannten zweiten Blockierungsanschlag (16) bildet.

8. Befestigungsvorrichtung (1) nach einem der vorhergehenden Ansprüche, **dadurch gekennzeichnet, dass** der genannte zweite Abschnitt (30) ein freies Ende (43) aufweist, das den genannten dritten Blockierungsanschlag (20) bildet.

9. Befestigungsvorrichtung (1) nach einem der vorhergehenden Ansprüche, **dadurch gekennzeichnet, dass** der genannte erste Abschnitt (29) mindestens die genannte Anlagefläche (10) umfasst.

10. Befestigungsvorrichtung (1) nach einem der vorhergehenden Ansprüche, **dadurch gekennzeichnet, dass** sie ein Haltemittel (14) umfasst, das dafür ausgelegt ist, dass der genannte erste Blockierungsanschlag (12) auf den genannten ersten Längsträger (6) eine Kraft in der genannten ersten Richtung (D1) zur genannten Anlagefläche (10) ausüben kann, damit der genannte erste Blockierungsanschlag (12) den genannten ersten Längsträger (6) gegen die genannte Anlagefläche (10) pressen kann, und dadurch, dass das genannte Haltemittel (14) mindestens eine Schraube (15) umfasst.

11. Befestigungsvorrichtung (1) nach dem vorhergehenden Anspruch und Anspruch 7, **dadurch gekennzeichnet, dass** sie auch mindestens ein drittes im Wesentlichen starres Stück (31) mit der Form eines L umfasst, das selbst mindestens ein Durchgangsloch (32) umfasst, das dazu bestimmt ist, die genannte Schraube (15) zum Halten des genannten ersten Längsträgers (6) zwischen dem genannten ersten Blockierungsanschlag (12) und der genannten Anlagefläche (10) aufzunehmen, wobei das genannte dritte Stück (31) mit dem genannten ersten Stück (26) fest verbunden ist.

12. Befestigungsvorrichtung (1) nach dem vorhergehenden Anspruch, **dadurch gekennzeichnet, dass** der genannte erste Abschnitt (29) außerdem mit einem Loch (34) versehen ist, das dazu bestimmt ist, die genannte Schraube (15) aufzunehmen und gegenüber dem genannten Durchgangsloch (32) positioniert zu werden, wenn das Haltemittel (14) verwendet wird.

13. Befestigungsvorrichtung (1) nach dem vorhergehenden Anspruch oder Anspruch 11, **dadurch gekennzeichnet, dass** sie auch einen Block (35) und Blockierungsmittel (37) des genannten Blocks (35) umfasst, wobei dieser Letztere mit einem Hohlraum (36) versehen ist, der dazu bestimmt ist, die genannte Schraube (15) aufzunehmen und gegenüber dem genannten Durchgangsloch (32) positioniert zu werden, wenn das genannte Haltemittel (14) platziert wird, wobei der genannte Block (35) dafür ausgelegt ist, um gegen die Blockierungsmittel (37) blockiert zu werden, wenn das genannte Haltemittel (14) platziert wird.

14. System zur Befestigung einer Platte (3), die einen Sonnenkollektor bildet, an einem Rahmen (38), mindestens umfassend:
- eine Stütze für die genannte Platte (3), die dazu bestimmt ist, an dieser Letzteren angebracht zu werden, wobei die genannte Stütze selbst mindestens einen ersten Längsträger (6) umfasst, wobei der genannte erste Längsträger (6) einen Flügel (41) umfasst, der sich in der Richtung zum Inneren der Platte (2) erstreckt, und
- eine Vorrichtung (1) zur Befestigung der genannten Stütze an einem Rahmen (38), selbst mindestens umfassend:
▪ eine Anlagefläche (10), gegen die der genannte erste Längsträger (6) bestimmt ist, unter der Einwirkung des Gewichts des Solarpaneels (2) anzuliegen,
▪ einen ersten Blockierungsanschlag (12) für den genannten ersten Längsträger (6), der gegenüber der Anlagefläche (10) angeordnet ist, damit der genannte erste Längsträger (6) zwischen der genannten Anlagefläche (10) und dem genannten ersten Blockierungsanschlag (12) angeordnet werden kann, um die Verschiebung des genannten ersten Längsträgers (6) in einer ersten Richtung (D1) zu begrenzen oder zu verhindern,
▪ einen zweiten Blockierungsanschlag (16) für den genannten ersten Längsträger (6),
wobei die Befestigungsvorrichtung (1) auch mindestens einen dritten Blockierungsanschlag (20) für den genannten ersten Längsträger (6) umfasst, der gegenüber dem zweiten Blockierungsanschlag (16) angeordnet ist, damit der genannte erste Längsträger (6) zwischen dem genannten zweiten und dritten Blockierungsanschlag (16, 20) angeordnet werden kann, um die Verschiebung des genannten ersten Längsträgers (6) in einer zweiten Richtung (D2) im Wesentlichen rechtwinklig zur genannten ersten Richtung (D1) zu begrenzen oder zu verhindern, **dadurch gekennzeichnet, dass** die Befestigungsvorrichtung (1) außerdem mindestens ein Stück (27) umfasst, das eine Biegung (28) bildet, wobei das genannte Stück (27) selbst mindestens einen ersten Abschnitt (29) einer Seite der Biegung (28) und einen zweiten Abschnitt (30) der anderen Seite der Biegung (28) umfasst, wobei das genannte Stück (27) eine Aufnahme (42) bildet, die von der genannten Biegung (28) und dem genannten ersten und zweiten Abschnitt (29, 30) begrenzt wird, wobei die genannte Aufnahme (42) dazu bestimmt ist, mindestens teilweise, sogar zur Gänze, den genannten Flügel (41) aufzunehmen.

15. Einheit zur Umwandlung von Sonnenstrahlung in elektrische oder thermische Energie, mindestens umfassend:
- ein Solarpaneel (2), das selbst mindestens eine Platte (3), die einen Sonnenkollektor bildet, und eine Stütze für die genannte Platte (3), die an dieser Letzteren angebracht ist, umfasst, wobei die genannte Stütze selbst mindestens einen ersten Längsträger (6) umfasst, wobei der genannte erste Längsträger (6) einen Flügel (41) umfasst, der sich in der Richtung zum Inneren der Platte (2) erstreckt, und
- eine Vorrichtung (1) zur Befestigung des genannten Solarpaneels (2) an einem Rahmen (38), wobei die genannte Befestigungsvorrichtung (1) mindestens umfasst:
▪ eine Anlagefläche (10), gegen die der genannte erste Längsträger (6) bestimmt ist, unter der Einwirkung des Gewichts des Solarpaneels (2) anzuliegen,
▪ einen ersten Blockierungsanschlag (12) für den genannten ersten Längsträger (6), der gegenüber der Anlagefläche (10) angeordnet ist, damit der genannte erste Längsträger (6) zwischen der genannten Anlagefläche (10) und dem genannten ersten Blockierungsanschlag (12) angeordnet werden kann, um die Verschiebung des genannten ersten Längsträgers (6) in einer ersten Richtung (D1) zu begrenzen oder zu verhindern,
▪ einen zweiten Blockierungsanschlag (16) für den genannten ersten Längsträger (6),
wobei die Befestigungsvorrichtung (1) auch mindestens einen dritten Blockierungsanschlag (20) für den genannten ersten Längsträger (6) umfasst, der gegenüber dem zweiten Blockierungsanschlag (16) angeordnet ist, damit der genannte erste Längsträger (6) zwischen dem genannten zweiten und dritten Blockierungsanschlag (16, 20) angeordnet werden kann, um die Verschiebung des genannten ersten Längsträgers (6) in einer zweiten Richtung (D2) im Wesentlichen rechtwinklig zur genannten ersten Richtung (D1) zu begrenzen oder zu verhindern, **dadurch gekennzeichnet, dass** die Befestigungsvorrichtung (1) außerdem mindestens ein Stück (27) umfasst, das eine Biegung (28) bildet, wobei das genannte Stück (27) selbst mindestens einen ersten Abschnitt (29) einer Seite der Biegung (28) und einen zweiten Abschnitt (30) der anderen Seite der Biegung (28) umfasst, wobei das genannte Stück (27) eine Aufnahme (42) bildet, die von der genannten Biegung (28) und dem genannten ersten und zweiten Abschnitt (29, 30) begrenzt wird, wobei die genannte Aufnahme (42) dazu bestimmt ist, mindestens teilweise, sogar zur Gänze, den genannten Flügel (41) aufzunehmen.

## Claims

1. Device (1) for attaching a solar panel (2) to a frame (38), said solar panel (2) comprising at least one plate (3) forming a solar collector and a support for said plate (3) attached thereto, said support itself comprising at least one first longitudinal member (6), said first longitudinal member (6) comprising a flange (41) extending in the direction of the inside of the panel (2), said attachment device (1) comprising at least:
- a bearing surface (10) against which said first longitudinal member (6) is intended to rest under the effect of the weight of the solar panel (2),
- a first locking stop (12) for said first longitudinal member (6), disposed opposite the bearing surface (10) so that said first longitudinal member (6) can be interposed between said bearing surface (10) and said first locking stop (12) in order to limit or prevent the movement of said first longitudinal member (6) in a first direction (D1),
- a second locking stop (16) for said first longitudinal member (6),
the attachment device (1) also comprising at least one third locking stop (20) for said first longitudinal member (6), disposed opposite the second locking stop (16) so that said first longitudinal member (6) can be interposed between said second and third locking stops (16, 20) in order to limit or prevent the movement of said first longitudinal member (6) in a second direction (D2) substantially perpendicular to said first direction (D1), **characterised in that** the attachment device (1) further comprises at least one part (27) forming an elbow (28), said part (27) itself comprising at least one first portion (29) on one side of the elbow (28), and a second portion (30) on the other side of the elbow (28), said part (27) forming a housing (42) delimited by said elbow (28) and said first and second portions (29, 30), said housing (42) being intended to accommodate said flange (41) at least partly, or even completely.

2. Attachment device (1) according to the preceding claim, **characterised in that** said first locking stop (12) has a first stop surface (13) intended to be positioned substantially parallel to said plate (3), and **in that** said second locking stop (16) has a second stop surface (17) substantially perpendicular to said first stop surface (13).

3. Attachment device (1) according to claim 1 or 2, **characterised in that** said bearing surface (10) is substantially parallel to said first stop surface (13).

4. Attachment device (1) according to one of the preceding claims, **characterised in that** said first longitudinal member (6) comprises an internal face (22) substantially turned towards the inside of the panel (2), and **in that** said third locking stop (20) is intended to be positioned opposite said internal face (22), so as to limit or prevent the movement of said first longitudinal member (6) away from said second stop (20) in said second direction (D2).

5. Attachment device (1) according to the preceding claim, **characterised in that** said third locking stop (20) is intended to cooperate with said internal face (22), the latter extending substantially perpendicular to said plate (3).

6. Attachment device (1) according to one of the preceding claims, **characterised in that** said bearing surface (10) is made in one piece with said third locking stop (20), and **in that** said bearing surface (10) is intended to be secured to said frame (38).

7. Attachment device (1) according to one of the preceding claims, **characterised in that** it also comprises at least one first substantially rigid part (26) in an L shape, said first part (26) being intended to cooperate with said first longitudinal member (6) at the right angle of said L shape, so that a first bar of said L shape forms said first locking stop (12) and a second bar of said L shape forms said second locking stop (16).

8. Attachment device (1) according to one of the preceding claims, **characterised in that** said second portion (30) has a free end (43) forming said third locking stop (20).

9. Attachment device (1) according to one of the preceding claims, **characterised in that** said first portion (29) comprises at least said bearing surface (10).

10. Attachment device (1) according to one of the preceding claims, **characterised in that** it comprises a clamping means (14) designed so that said first locking stop (12) can exert, on said first longitudinal member (6), a force, in said first direction (D1), towards said bearing surface (10), so that said first locking stop (12) can press said first longitudinal member (6) against said bearing surface (10), and **in that** said clamping means (14) comprises at least one screw (15).

11. Attachment device (1) according to the preceding claim and claim 7, **characterised in that** it also comprises at least one substantially rigid third part (31) having an L shape, itself comprising at least one through aperture (32) intended to accommodate said screw (15) for clamping said first longitudinal member (6) between said first locking stop (12) and said bearing surface (10), said third part (31) being secured to said first part (26).

12. Attachment device (1) according to the preceding claim, **characterised in that** said first portion (29) is also provided with a hole (34) intended to accommodate said screw (15) and to be positioned opposite said through aperture (32) when the clamping means (14) is used.

13. Attachment device (1) according to the preceding claim or claim 11, **characterised in that** it also comprises a block (35) and means (37) for locking said block (35), the latter being provided with a cavity (36) that is intended to accommodate said screw (15) and to be positioned opposite said through aperture (32) when said clamping means (14) is put in place, said block (35) being designed so as to be locked against the locking means (37) when the clamping means (14) is put in place.

14. System for attaching a plate (3) forming a solar collector to a frame (38), comprising at least:
- a support for said plate (3) intended to be attached thereto, said support itself comprising at least one first longitudinal member (6), said first longitudinal member (6) comprising a flange (41) extending in the direction of the inside of the panel (2), and
- a device (1) for attaching said support to a frame (38), itself comprising at least:
▪ a bearing surface (10) against which said first longitudinal member (6) is intended to rest under the effect of the weight of the solar panel (2),
▪ a first locking stop (12) for said first longitudinal member (6), disposed opposite the bearing surface (10) so that said first longitudinal member (6) can be interposed between said bearing surface (10) and said first locking stop (12) in order to limit or prevent the movement of said first longitudinal member (6) in a first direction (D1),
▪ a second locking stop (16) for said first longitudinal member (6),
the attachment device (1) also comprising at least one third locking stop (20) for said first longitudinal member (6), disposed opposite the second locking stop (16) so that said first longitudinal member (6) can be interposed between said second and third locking stops (16, 20) in order to limit or prevent the movement of said first longitudinal member (6) in a second direction (D2) substantially perpendicular to said first direction (D1), **characterised in that** the attachment device (1) further comprises at least one part (27) forming an elbow (28), said part (27) itself comprising at least one first portion (29) on one side of the elbow (28), and a second portion (30) on the other side of the elbow (28), said part (27) forming a housing (42) delimited by said elbow (28) and said first and second portions (29, 30), said housing (42) being intended to accommodate said flange (41) at least partly, or even completely.

15. Assembly for converting solar radiation into electrical or thermal energy, comprising at least:
- a solar panel (2), itself comprising at least one plate (3) forming a solar collector and a support for said plate (3) attached thereto, said support itself comprising at least one first longitudinal member (6), said first longitudinal member (6) comprising a flange (41) extending in the direction of the inside of the panel (2), and
- a device (1) for attaching said solar panel (2) to a frame (38), said attachment device (1) comprising at least:
▪ a bearing surface (10) against which said first longitudinal member (6) is intended to rest under the effect of the weight of the solar panel (2),
▪ a first locking stop (12) for said first longitudinal member (6), disposed opposite the bearing surface (10) so that said first longitudinal member (6) can be interposed between said bearing surface (10) and said first locking stop (12) in order to limit or prevent the movement of said first longitudinal member (6) in a first direction (D1),
▪ a second locking stop (16) for said first longitudinal member (6),
the attachment device (1) also comprising at least one third locking stop (20) for said first longitudinal member (6), disposed opposite the second locking stop (16) so that said first longitudinal member (6) can be interposed between said second and third locking stops (16, 20) in order to limit or prevent the movement of said first longitudinal member (6) in a second direction (D2) substantially perpendicular to said first direction (D1), **characterised in that** the attachment device (1) further comprises at least one part (27) forming an elbow (28), said part (27) itself comprising at least one first portion (29) on one side of the elbow (28), and a second portion (30) on the other side of the elbow (28), said part (27) forming a housing (42) delimited by said elbow (28) and said first and second portions (29, 30), said housing (42) being intended to accommodate said flange (41) at least partly, or even completely.
